# EUROPEAN PATENT SPECIFICATION

(11) **EP 2 891 277 B1**
(45) Date of publication and mention of the grant of the patent: **09.08.2017**
(21) Application number: 13776628.3
(22) Date of filing: 25.09.2013
(51) Int. Cl.: H04L 12/931, H04L 12/715, H04L 12/723, H04L 12/46

(54) **OVERLAY VIRTUAL GATEWAY FOR OVERLAY NETWORKS**
ÜBERLAGERUNG EINES VIRTUELLEN GATEWAYS FÜR ÜBERLAGERUNGSNETZE
PASSERELLE VIRTUELLE DE SUPERPOSITION POUR RÉSEAUX SUPERPOSÉS

(30) Priority: 26.09.2012 US 201261706067 P
(43) Date of publication of application: 08.07.2015
(73) Proprietor: Huawei Technologies Co., Ltd., Longgang District Shenzhen, Guangdong 518129 (CN)
(72) Inventor: YONG, Lucy, Georgetown, Texas 78628 (US)
(74) Representative: Körber, Martin Hans
(86) International application number: PCT/US2013/061740
(87) International publication number: WO 2014/052485

(56) References cited:
- US-A1- 2012 099 602
- YONG HUAWEI M TOY COMCAST A ISAAC BLOOMBERG V MANRAL HEWLETT-PACKARD L DUNBAR HUAWEI L: "Use Cases for DC Network Virtualization Overlays; draft-mity-nvo3-use-case-04.txt", USE CASES FOR DC NETWORK VIRTUALIZATION OVERLAYS; DRAFT-MITY-NVO3-USE-CASE-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 22 October 2012 (2012-10-22), pages 1-17, XP015085104, [retrieved on 2012-10-22]
- YONG HUAWEI M TOY COMCAST A ISAAC BLOOMBERG V MANRAL HEWLETT-PACKARD L DUNBAR HUAWEI L: "Use Cases for DC Network Virtualization Overlays; draft-mity-nvo3-use-case-02.txt", USE CASES FOR DC NETWORK VIRTUALIZATION OVERLAYS; DRAFT-MITY-NVO3-USE-CASE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 August 2012 (2012-08-23), pages 1-18, XP015086955, [retrieved on 2012-08-23]
- NADEAU J DRAKE EDITORS JUNIPER NETWORKS B SCHLISSER Y REKHTER RAVI SHEKHAR JUNIPER NETWORKS NABIL BITAR T: "A Control Plane for Network Virtualized Overlays; draft-drake-nvo3-evpn-control-plane-00.txt ", A CONTROL PLANE FOR NETWORK VIRTUALIZED OVERLAYS; DRAFT-DRAKE-NVO3-EVPN-CONTROL-PLANE-00.TXT , INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 17 September 2012 (2012-09-17), pages 1-12, XP015087327, [retrieved on 2012-09-17]
- WU Y CUI X LI TSINGHUA UNIVERSITY J: "4over6 Transit using Encapsulation and BGP-MP Extension; draft-wu-softwire-4over6-01.txt", 20060909, no. 1, 9 September 2006 (2006-09-09), XP015047331, ISSN: 0000-0004
- SHANKAR KAMBAT VENKATRAMAN RAMALINGAM PANDI CHANDRAN WIPRO TECHNOLOGIES: "BGP-4 Reference Attribute Capability <draft-shankar-bgp-reference-capability-00 .txt>; draft-shankar-bgp-reference-capability-00. txt", 20030301, 1 March 2003 (2003-03-01), XP015005232, ISSN: 0000-0004

## Description

### TECHNICAL FIELD

The present invention relates to the field of communications technologies, and in particular, to a method and a device for providing communication over an overlay virtual network (OVN) with multiple data plane encapsulations at a tunnel endpoint.

### BACKGROUND

Computer virtualization has dramatically and quickly changed the information technology (IT) industry in terms of efficiency, cost, and the speed in providing new applications and/or services. The trend continues to evolve towards network virtualization, where a set of virtual machines (VMs) or servers may communicate in a virtual network environment that is decoupled from the underlying physical networks in a data center (DC). An overlay virtual network is one approach to provide network virtualization services to a set of VMs or servers. An overlay virtual network may enable the construction of many virtual tenant networks on a common network infrastructure, where each virtual tenant network may have independent address space, independent network configurations, and traffic isolation among each other, which are all decoupled from the underlying network infrastructure. In addition, an overlay virtual network may support migrations of VMs since there is no longer a physical network limitation. Further, an overlay virtual network may speed up the configuration of multi-tenant cloud applications and virtual DCs, leading to potential new DC applications, such as a software defined DC.

An overlay virtual network may provide communication among a set of tenant systems (TSs), where TSs may be VMs on a server or physical servers. An overlay virtual network may provide Layer 2 (L2) or Layer 3 (L3) services to the connected TSs via network virtualization edges (NVEs), where NVEs may be implemented as part of a virtual switch within a hypervisor, and/or physical switch or router. An NVE encapsulates ingress tenant traffic and sends the encapsulated traffic over a tunnel across an underlying network toward an egress NVE. An egress NVE at the tunnel remote end point decapuslates the traffic prior to delivering the original data packet to the appropriate TS. There are a number of encapsulation protocols available in the industry today, such as virtual extensible Local Area Network (VXLAN) encapsulation, Microsoft's Network Virtualization over Generic Routing Encapsulation (NVGRE), and Internet Protocol (IP) Generic Routing Encapsulation (GRE). In some instances, the NVEs in an overlay virtual network instance may not employ the same encapsulation protocols. In addition, an overlay virtual network may interwork with a non-overlay virtual network such as virtual local area network (VLAN). Consequently, there is a need in the art for a solution to enable multiple data plane encapsulations in an overlay virtual network by automatically mapping services and identifiers and translating encapsulation semantics between different encapsulation protocols.

YONG HUAWEI M TOY COMCAST A ISAAC BLOOMBERG V MANRAL HEWLETT-PACKARD L DUNBAR HUAWEI L, "Use Cases for DC Network Virtualization Overlays; draft-mity-nvo3-use-case-02.txt", USE CASES FOR DC NETWORK VIRTUALIZATION OVERLAYS; DRAFT-MITY-NVO3-USE-CASE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, (20120823), PAGE 1 - 18, XP015086955, describes the generalized NVO3 use cases.

NADEAU J DRAKE EDITORS JUNIPER NETWORKS B SCHLISSER Y REKHTER RAVI SHEKHAR JUNIPER NETWORKS NABIL BITAR T, "A Control Plane for Network Virtualized Overlays; draft-drake-nvo3-evpn-control-plane-00.txt", A CONTROL PLANE FOR NETWORK VIRTUALIZED OVERLAYS; DRAFT-DRAKE-NV03-EVPN-CONTROL-PLANE-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, (20120917), PAGE 1 - 12, XP015087327, describes how E-VPN can be used as the control plane for Network Virtual Overlays.

### SUMMARY

In one embodiment, a method for providing communication over an overlay virtual network (OVN) with multiple data plane encapsulations at a tunnel endpoint is provided that comprises receiving a data packet via a first overlay tunnel, wherein the data packet comprises an encapsulation header of a first encapsulation type and an inner destination address; determining an egress tunnel endpoint and a second encapsulation type supported by the egress tunnel end point based on the inner destination address; performing encapsulation translation on the data packet by replacing the encapsulation header of the first encapsulation type with an encapsulation header of the second encapsulation type to form a translated packet; and forwarding the translated packet toward the egress tunnel endpoint via a second overlay tunnel, wherein the first encapsulation type and the second encapsulation type are different encapsulation types, and wherein the data packet is destined to the egress tunnel endpoint.

In another embodiment, a Network Element (NE) in a overlay virtual network (OVN) is provided, the NE comprises transceivers (Tx/Rx) which may be transmitters, receivers, or combinations thereof, a plurality of downstream ports and upstream ports each for transmitting and/or receiving frames from other nodes and coupled to the Tx/Rx, a processor coupled to the Tx/Rx to process the frames and/or determine which nodes to send the frames, wherein the processor comprises a data plane encapsulation module, which is configured to receive a data packet via a first overlay tunnel, wherein the data packet comprises an encapsulation header of a first encapsulation type and an inner destination address; determine an egress tunnel endpoint and a second encapsulation type supported by the egress tunnel end point based on the inner destination address; perform encapsulation translation on the data packet by replacing the encapsulation header of the first encapsulation type with an encapsulation header of the second encapsulation type to form a translated packet; and forward the translated packet toward the egress tunnel endpoint via a second overlay tunnel, wherein the first encapsulation type and the second encapsulation type are different encapsulation types, and wherein the data packet is destined to the egress tunnel endpoint.

These and other features will be more clearly understood from the following detailed description taken in conjunction with the accompanying drawings and claims.

### BRIEF DESCRIPTION OF DRAWINGS

For a more complete understanding of this disclosure, reference is now made to the following brief description, taken in connection with the accompanying drawings and detailed description, wherein like reference numerals represent like parts.
FIG. 1 is a schematic diagram of an example embodiment of an overlay network system where embodiments of the present disclosure may operate.
FIG. 2 is a schematic diagram of an example embodiment of an overlay network system with multiple data plane encapsulations.
FIG. 3 is a schematic diagram of an example embodiment of a packet header that is tunneled between a pair of NVEs supporting the same encapsulations.
FIG. 4 is a schematic diagram of an example embodiment of a packet header that is tunneled between an NVE and an overlay virtual gateway (OVG).
FIG. 5 is a schematic diagram of an example embodiment of a packet header that is transmitted by an OVG after encapsulation translation.
FIG. 6 is a schematic diagram of another example embodiment of a packet header that is transmitted by an OVG after encapsulation translation.
FIG. 7 is a flowchart of an example embodiment of a method for performing control plane functions in an OVN with multiple data plane encapsulations.
FIG. 8 is a flowchart of an example embodiment of a method for performing data plane functions at an NVE in an OVN.
FIG. 9 is a flowchart of an example embodiment of a method for performing data plane functions at an OVG in an OVN.
FIG. 10 is a schematic diagram of an example embodiment of a BGP Open message with OVG capability.
FIG. 11 is a schematic diagram of an example embodiment of an encapsulation sub-type-length-value (TLV).
FIG. 12 is a schematic diagram of an example embodiment of a Network Layer Reachability Information (NLRI) type sub-TLV.
FIG. 13 is a schematic diagram of an example embodiment of a service function sub-TLV.
FIG. 14 is a schematic diagram of an example embodiment of a BGP Update message with tunnel encapsulation attribute.
FIG. 15 is a schematic diagram of an example embodiment of an encapsulation sub-TLV for VXLAN.
FIG. 16 is a schematic diagram of an example embodiment of an encapsulation sub-TLV for NVGRE.
FIG. 17 is a schematic diagram of an example embodiment of an encapsulation sub-TLV for Multiprotocol Label Switching (MPLS) over IP.
FIG. 18 is a schematic diagram of an embodiment of a network element.

### DESCRIPTION OF EMBODIMENTS

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

Disclosed herein are methods, apparatuses, and/or computer program products for communicating over an OVN that may support multiple data plane encapsulations. An NVE may communicate to a peer NVE directly when the peer NVE employs the same encapsulation type and automatically selects an OVG that may perform encapsulation translations when the peer NVE employs a different encapsulation type. An OVG or an NVE within an OVN may perform control plane functions, such as advertising its supported data plane encapsulation types and routes, tracking encapsulation types supported by other OVGs and/or peer NVEs in the same OVN, and maintaining forwarding routes to reach other OVGs and/or peer NVEs in the same OVN. In an example embodiment, a BGP may be extended to facilitate the control signaling automatically for multiple data plane encapsulations in an OVN. It should be noted that other control plane protocols may also be employed to implement the invention in the present disclosure.

It should be noted that in the present disclosure, the terms "underlying network", "infrastructure network", and "DC network" all refer to the actual physical network and may be used interchangeably. The terms "overlay virtual network" ("OVN"), "tenant network", "overlay instance", "overlay network", and "network virtual overlay instance" refer to network virtualization overlay as described in the Internet Engineering Task Force (IETF) document draft-narten-nvo3-arch-00, which is incorporated herein by reference, and the terms may be used interchangeably. However, a "tenant network" may also comprise one or more OVNs. The terms "tenant system" ("TS") and "endpoint" refer to an entity that originates or receives data from an OVN, and may be used interchangeably.

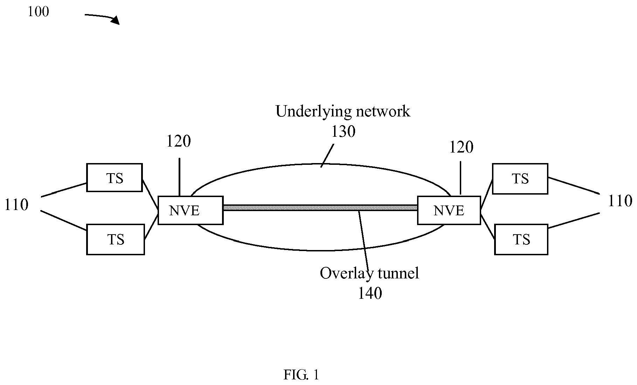

FIG. 1 is a schematic diagram of an example embodiment of an overlay network system 100 where embodiments of the present disclosure may operate. Overlay network system 100 may comprise an underlying network 130, a plurality of NVEs 120, an overlay tunnel 140, and a plurality of TSs 110. In an overlay virtual network instance, any pair of NVEs 120 may be connected directly by an overlay tunnel 140, which may be a point-to-point (P2P), or point-to-multipoint (P2MP), or multipoint-to-point (MP2P) connection. The overlay tunnel 140 may transport encapsulated data traffic across the underlying network 130 between the pair of NVEs 120.

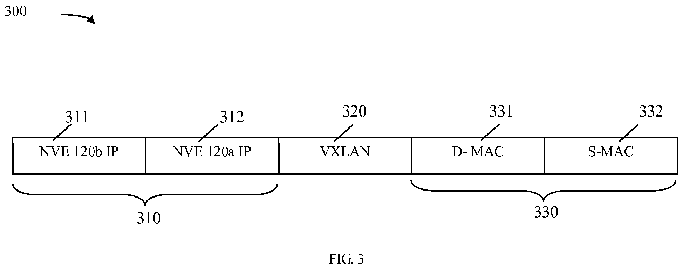

FIG. 1 illustrates the NVEs 120 residing at the boundary between a TS 110 and the OVN formed by the pair of NVEs 120. Each NVE 120 may be associated with a plurality of TSs 110, and may provide network virtualization services to the associated TSs 110. A network virtualization instance may be functioned as L2 or L3 as described in the IETF document draft-narten-nvo3-arch-00, where tenant traffic may be tunneled to remote NVEs 120 based on the Media Access Control (MAC) address of the TSs 110 or the IP addresses of the TSs 110, respectively. The data packets may be forwarded between NVEs 120 in the underlying network 130 based on the outer addresses on the packets, which may be described in more detail herein below with respect to FIGS. 3-6.

NVEs 120 may be implemented using software components, hardware, or a combination of both, and may be located on a virtual switch within a hypervisor, a physical switch, or server. NVEs 120 may perform routing, bridging, forwarding functions, and/or overlay virtual network functions. Overlay virtual network functions may include creation and maintenance of OVN states, data plane encapsulations/decapsulations, overlay tunnel initiations/establishments/tear downs, and automatic selection of overlay tunnels.

TSs 110 may include, but are not limited to VMs on a server, hosts, physical servers or other types of end devices that may originate data to or receive data from the overlay network via an NVE 120. TSs 110 may comprise an L2 Ethernet interface used to communicate with their associated NVEs 120. TSs 110 may be unaware of the overlay network. TSs 110 may communicate to remote TSs 110 in the same tenant network by sending packets directly to their associated NVEs 120.

The underlying network 130 is a physical network that provides connectivity between NVEs 120, but may be completely unaware of the overlay packets, the overlay tunnels 140, and the OVN. For instance, the underlying network 130 may be a DC physical network comprising Top of Rack (ToR) switches, aggregation switches, core switches, and/or DC gateway routers. Alternatively, the underlying network 130 may be multiple interconnected DC networks where NVEs 120 may be located in the same or different DC networks. In addition, the underlying network 130 may support multiple independent OVNs.

Typically, a large data center may deploy servers with different capacities, and/or features, and servers may be rolled out at different times. For example, a data center may comprise a combination of virtual servers and physical servers, which may be equipped with virtual switches. The servers that are equipped with hypervisor based virtual switches may support different encapsulation protocols, such as VXLAN encapsulation, Microsoft's NVGRE, IP GRE, MPLS or other encapsulation protocols. In order to enable communication between NVEs 120 in an OVN with multiple data plane encapsulations, there is a need to have an entity, either on a gateway or a standalone entity, that may map network services and network identifiers and modify packet encapsulation semantics with different encapsulations.

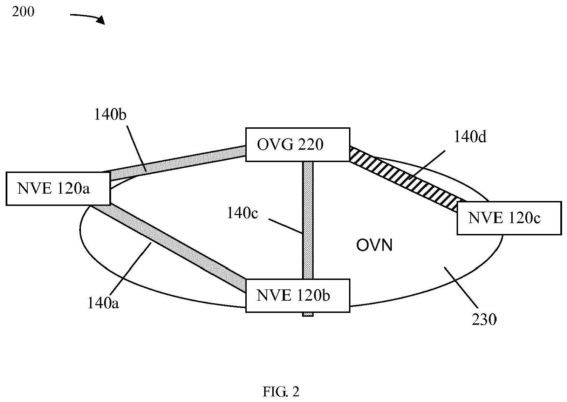

FIG. 2 illustrates an example of another embodiment of an overlay network system 200 comprising an OVN 230 with different data plane encapsulations. In overlay network system 200, NVEs 120a and 120b may support VXLAN encapsulation, and NVE 120c may support NVGRE encapsulation but not VXLAN encapsulation. In order to facilitate communications among NVEs 120a-c, an OVG 220 that supports both VXLAN and NVGRE encapsulations may be used to translate encapsulation semantics between the different encapsulations. For instance, NVE 120a may build a direct overlay tunnel 140a to communicate with a peer NVE 120b that supports the same VXLAN encapsulation. However, NVE 120a may not build a direct overlay tunnel to a peer NVE 120c that supports a different encapsulation, and instead NVE 120a may need to forward the data packets to an OVG 220 via an overlay tunnel 140b that can support both VXLAN and NVGRE encapsulation. Similarly, NVE 120b may forward packets destined to NVE 120c to OVG 220 via an overlay tunnel 140c. When OVG 220 receives a VXLAN encapsulated packet destined to NVE 120c from NVE 120a, OVG 220 may perform encapsulation translation from VXLAN to NVGRE. An overlay tunnel 140d may be built between OVG 220 and NVE 120c so that OVG 220 may forward the NVGRE encapsulated packets to NVE 120c. Persons of ordinary skill in the art are aware that NVEs 120 may support one or more encapsulation types including overlay and non-overlay encapsulations and may be configured to support multiple independent network overlay instances. Similarly, OVG 220 may support many encapsulation types including overlay and non-overlay encapsulations and may be configured to support multiple independent network overlay instances. In addition, the encapsulation payload type may be L2, L3, or other payload types. However, the overlay tunnel selection process described in respect to FIG. 2 based on encapsulation types within an OVN 230 may still apply.

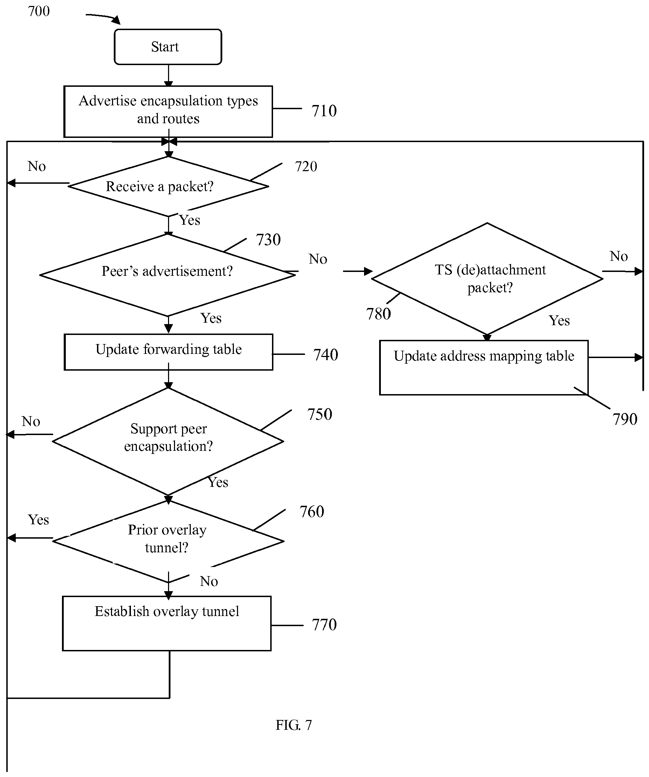

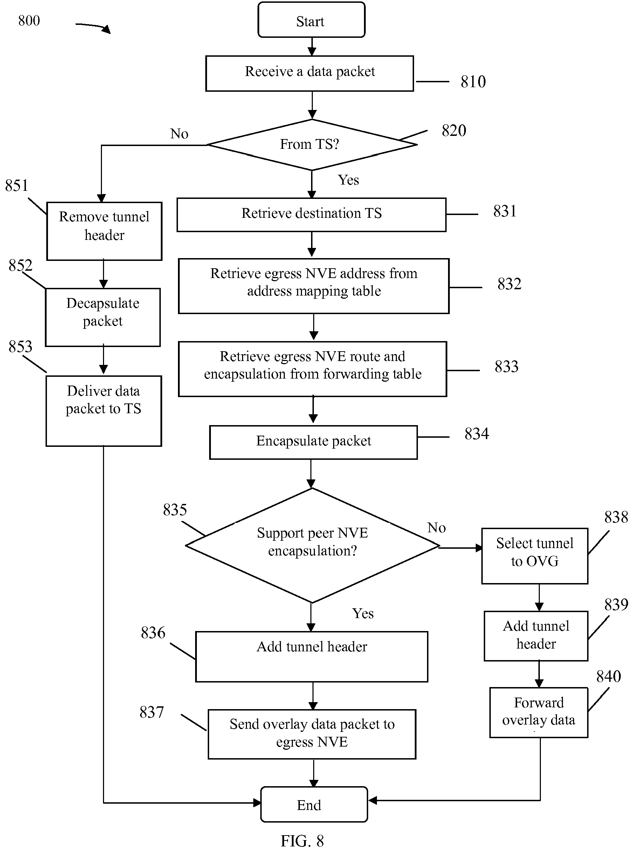

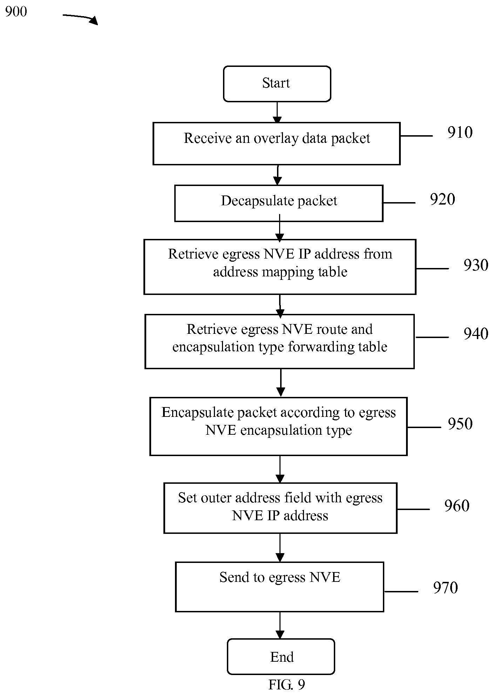

In one example embodiment, a DC operator may configure several OVGs 220 in a network overlay instance for load balancing. OVGs 220 in an OVN 230 may establish tunnels between each other and may perform load balancing on one or more OVGs 220. In addition, a DC operator may configure an OVG 220 or an NVE 120 to support multiple OVNs 230. However, the control plane functions described in method 700 with respect to FIG. 7 and the data plane functions described in methods 800 and 900 described with respect to FIG. 8 and 9, respectively, may all still be applied. Method 700, 800, and 900 will be discussed later. In the case when an NVE 120 or an OVG 220 supports multiple OVNs 230, the virtual network identifier (VNID) of the packet should be checked and data packets should be forwarded accordingly.

An OVN 230 may also support broadcast and/or multicast traffic. Broadcast and/or multicast traffic may be used to deliver common data packets to all tunnel endpoints in an OVN 230 and/or a set of tunnel endpoints in an OVN 230, respectively. In one example embodiment, an NVE 120 who is the ingress point of the broadcast and/or multicast data packet may replicate the broadcast and/or data packets to other peer NVEs 120 or OVGs 220 that support the same data plane encapsulation. In another example embodiment, NVE 120 may first route the broadcast and/or multicast data packets to an OVG 220, and the OVG 220 may send the broadcast and/or data packets over a P2MP overlay tunnel 140 to reach other NVEs 120. In order to avoid packet duplications in an OVN 230 with multiple OVGs 220, a DC operator may configure one OVG 220 as a designated gateway to forward all or a set of multicast and/or broadcast traffic. The designated OVG may determine a set of tunnel endpoints that may receive the multicast and/or broadcast data packet. The designated OVG may determine the encapsulation types supported by the set of receiving tunnel endpoints and encapsulate the data packet into the corresponding encapsulation types, which may or may not be the same. The designated OVG may then forward the corresponding encapsulated data packet to the receiving tunnel endpoint. When a non-designated OVG 220 receives a multicast and/or a broadcast data packet, the non-designated OVG 220 may drop the data packet.

The overlay tunnels 140a-d may transport data packets with a packet header comprising an inner address field, an encapsulation header, and an outer address field. In one example embodiment, the inner address field may comprise a MAC address of a remote TS that the data packet is destined to and a MAC address of the source TS that originated the data packet. The encapsulation header may comprise a VNID and/or other encapsulation type specific information. The outer address field may comprise IP addresses of the source and egress tunnel endpoints (e.g. NVE 120a-c or OVG 220), and thus the outer address field may also be referred to as the tunnel header. FIGS. 3-6 depict different packet headers that may be sent when a pair of NVEs (e.g. NVE 120a and NVE 120b) supports the same encapsulation type, and when a pair of NVEs (e.g. NVE 120a and NVE 120c) supports different encapsulation types and require an OVG 220 to perform encapsulation translation. FIGS. 3-6 are intended to illustrate the process of data plane encapsulations and/or encapsulation translations performed at an NVE 120 or an OVG 220. Thus, the detail of the inner address field is not shown. FIGS. 3-6 will be discussed in more detail below.

In one example embodiment, the inner address field may be provided by an originating TS (not shown in FIG. 2) and embedded in a packet sent to an associated NVE 120. The inner address field may be treated as part of a packet payload at an NVE 120 or an OVG 220. An NVE 120 that receives ingress traffic from a TS 110 may add an encapsulation header and an outer address field to the packet payload, and a receiving NVE 120 may remove the encapsulation header and the outer address field. An OVG 220 may perform encapsulation translation by replacing the encapsulation header in a received data packet by a new encapsulation header according to the encapsulation type supported by an egress NVE 120 and may also modify the outer address field.

FIG. 3 illustrates an example embodiment of a packet header 300 of a packet sent directly from NVE 120a to a peer NVE 120b over the overlay tunnel 140a as shown in FIG. 2, where NVEs 120a and 120b support the same VXLAN encapsulation type. The packet header 300 may comprise an inner address field 330, a VXLAN encapsulation header 320, and an outer address field 310. The inner address field 330 may comprise a destination-MAC (D-MAC) address 331 and a source-MAC (S-MAC) address 332. The VXLAN encapsulation header 320 and the outer address 310 may be added by NVE 120a. The outer address field 310 may comprise a source IP address and a destination IP address, where the source IP address is set to NVE 120a's IP address 312 and the destination IP address is set to NVE 120b's IP address 311.

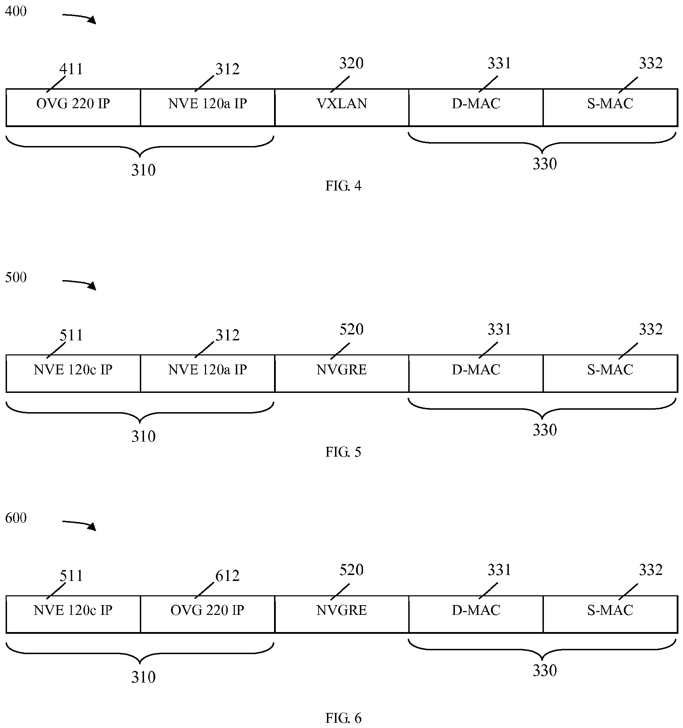

As discussed earlier, NVE 120a may not send a packet directly to a peer NVE 120c that supports a different encapsulation type. Instead, NVE 120a may first send the VXLAN encapsulated packet to an OVG 220. FIG. 4 illustrates an example embodiment of a packet header 400 of a packet destined to NVE 120c that is sent from NVE 120a to OVG 220 over the overlay tunnel 140b as shown in FIG. 2. The packet header 400 may be similar to packet header 300, except the destination IP address in the outer address field 310 is set to OVG 220 IP address 411 by OVG 220.

FIG. 5 illustrates an example embodiment of a packet header 500 of a packet forwarded from OVG 220 to NVE 120c over overlay tunnel 140d as shown in FIG. 2. When OVG 220 receives a VXLAN encapsulated packet from NVE 120a, OVG 220 may perform encapsulation translation from VXLAN to NVGRE. That is, OVG 220 may remove the original VXLAN encapsulation header 320 and add a new NVGRE encapsulation header 520. OVG 220 may also set the destination IP address in the outer address field 310 to NVE 120c's IP address 511 and keep the source IP address in the outer address field 310 as NVE 120a's IP address 312. It should be noted that OVG 220 may not modify the payload of the data packet.

Another example embodiment of a packet header 500 is shown in FIG. 6 as packet header 600. The packet header 600 is similar to the packet header 500. However, in this example embodiment, OVG 220 may also replace the NVE 120a's IP address 312 in the outer address field 310 by OVG 220's IP address 612. OVG 220 may then forward the packet to NVE 120c.

In order to facilitate multiple data plane encapsulations in an OVN, OVN 230 may employ a control plane protocol, such as BGP and Interior Gateway Protocol (IGP) without manual configurations. Control plane functions may include establishing an OVN 230, advertising encapsulation types and tunnel routes, tracking peers' routes and corresponding encapsulation types, and maintaining lookup tables for routing and forwarding. Typically, a DC operator may configure a plurality of NVEs 120 and/or one or more OVGs 220 to be members of an OVN 230. Subsequent overlay functionalities may be performed by the NVEs 120 and/or the OVGs 220 through some control plane protocol.

FIG. 7 illustrates a flowchart of an example embodiment of a method 700 for performing control plane functions in an OVN. Method 700 may be implemented by an NVE 120 or an OVG 220 as discussed in FIG. 2. At step 710, method 700 may advertise the supported data plane encapsulation types and routes. The advertised message may be received by any peer (e.g. NVEs 120 or OVGs 220 from FIG. 2) that belongs to the same OVN. In an overlay virtual network instance, other peers may also advertise their supported encapsulation types and routes. At step 720, method 700 may check if a packet has been received from the OVN. At step 730, method 700 may check if the received packet is an advertised message from other peers in regards to the supported data encapsulation types and routes by other peers. Upon the reception of an advertised message from a peer, method 700 may update a forwarding table with the peer's encapsulation types and routes as shown in step 740.

At step 750, method 700 may check if the peer supports the same encapsulation type. If the peer supports the same encapsulation type, method 700 may proceed to step 760 to check if a prior overlay tunnel has been established with the peer. Method 700 may continue to step 770 and establish an overlay tunnel when an overlay tunnel has not been established with the peer. Otherwise, method 700 may return back to step 720 from step 760 when a prior overlay tunnel has been established with the peer. Recall in FIG. 2, an OVG 220 may establish an overlay tunnel 140 to an NVE 120 that has advertised an encapsulation type supported by the OVG 220. It should be noted that the establishment of an overlay tunnel may require multiple negotiation steps with the peer not shown in method 700. After method 700 completes step 770, method 700 may return back to step 720 and continue to listen for a packet. Alternatively, at step 750, method 700 may return back to block 720 when the peer does not support the same encapsulation. In another example embodiment, method 700 may skip the overlay tunnel establishment performed in steps 760 and 770, and may establish an overlay tunnel dynamically when there is interest for the route.

Returning to step 730, method 700 may proceed to step 780 when method 700 does not receive a peer advertisement that represents the encapsulation type and routes supported by the peer. At step 780, method 700 may determine the packet is a TS attachment or detachment message. The attachment or detachment message may be advertised by an NVE when a TS attaches or detaches from an NVE, respectively. Upon the reception of the TS attachment or detachment message, method 700 may continue to step 790 and update an address mapping table with the addresses (e.g. MAC addresses or IP addresses) of the TS and the associated NVE. After method 700 completes step 790, method 700 may return to block 720 and continue to listen for a packet. Alternatively, at step 780, method 700 may return to block 720 when the received packet is not a TS attachment or detachment message. In another example embodiment, method 700 may skip the address mapping performed in steps 780 and 790 and may obtain the TS to NVE address mapping by employing other address mapping protocols, such as the Address Resolution Protocol (ARP), instead.

FIG. 8 illustrates a flowchart of an example embodiment of a method 800 for routing data traffic at an NVE, which may be implemented by an NVE 120, as shown in FIG. 2. Method 800 may begin with receiving a data packet at step 810. At step 820, method 800 may check if the data packet is received from an attached TS or from an overlay tunnel. If the data packet is from an attached TS, method 800 may operate as an ingress NVE. At step 831, method 800 may retrieve a destination TS address from the data packet. At step 832, method 800 may retrieve an address mapping table entry with a mapping of the destination TS address to its associated NVE address (i.e. egress NVE address). The address mapping table may be built previously from control plane as described in method 700 of FIG. 7, a network node, and/or some other address resolution protocols. At step 833, method 800 may retrieve a forwarding table entry with the egress NVE's route and encapsulation type. The forwarding table may be built previously from control plane as described in method 700 of FIG. 7, a network node, and/or some other central authority. At step 834, method 800 may encapsulate the data packet according to the encapsulation type supported at the ingress NVE (e.g. adding an encapsulation header as shown in FIG. 4).

At step 835, method 800 may check if the egress NVE supports the same encapsulation type as the ingress NVE. If the egress NVE supports the same encapsulation type, method 800 may proceed to step 836 to add a tunnel header to the encapsulated data packet. The tunnel header may comprise the egress NVE's IP address and the ingress NVE's IP address, as described in packet header 300 with respect to FIG. 3. At step 837, method 800 may send the encapsulated data packet directly to the egress NVE.

Returning to step 835, if the egress NVE supports a different encapsulation type, method 800 may select an overlay tunnel to an OVG that may support both the ingress NVE and the egress NVE encapsulation types as shown in step 838. At step 839, method 800 may add a tunnel header to the encapsulated data packet, which may comprise the OVG's IP address and the ingress NVE's IP address, as described in packet header 400 with respect to FIG. 4. At step 840, method 800 may send the data packet to OVG.

Returning to step 820, an NVE may also receive a data packet destined to one of its associated TSs via an overlay tunnel either from an OVG or a peer NVE. In this case, method 800 may operate as the egress NVE. At step 851, method 800 may remove the tunnel header from the received data packet. At step 852, method 800 may decapsulate the received data packet (i.e. removing the encapsulation header). At step 853, method 800 may deliver the data packet to the destination TS.

FIG. 9 illustrates a flowchart of an example embodiment of a method 900 for performing data plane functions at an OVG. Method 900 may be implemented by an OVG 220, as described in FIG. 2. Method 900 may begin with receiving an overlay data packet via an overlay tunnel as shown in step 910. In one example embodiment, the overlay tunnel may be terminated once the overlay data packet is received at the OVG. The overlay data packet may be destined to a TS associated with a remote NVE that may not support the same encapsulation type as the ingress NVE. At step 920, method 900 may decapsulate (i.e. removing the encapsulation header) the data packet according to the encapsulation type used by the ingress NVE.

At step 930, method 900 may retrieve an address mapping table entry with a mapping of the destination TS address to its associated NVE address (i.e. egress NVE address). The destination TS address may be obtained from an inner address field of the data packet. The address mapping table may be built previously from control plane as described in method 700 of FIG. 7, a network node, and/or some other address resolution protocols. At step 940, method 900 may retrieve a forwarding table entry based on the egress NVE's IP address, where the forwarding table entry may comprise the egress NVE's route and supported encapsulation type. At step 950, method 900 may encapsulate the data packet (i.e. adding an encapsulation header) according to the encapsulation type supported at the egress NVE. At step 960, method 900 may update the tunnel header of the data packet by setting the destination IP address to the egress NVE's IP address and keeping the source IP address as the ingress NVE's IP address, as described in packet header 500 with respect to FIG. 5. At step 970, method 900 may send the data packet to the egress NVE. Alternatively, at step 960, method 900 may also set the source IP address in the tunnel header to the OVG's IP address, as described in packet header 600 with respect to FIG. 6.

The control plane functions described in method 700 of FIG. 7 may be realized by leveraging and/or extending any of the existing control plane protocols. The example embodiments herein below describe various extensions to the BGP. Request For Comment (RFC) 5512, which is incorporated herein as if reproduced in its entirety, specifies the protocol and mechanism for BGP peers to exchange tunnel endpoint information. The extensions may be built based on the RFC 5512, and may include adding an additional capability field in BGP Open messages to indicate the support of OVG capability and additional encapsulation attributes in NLRI when advertising routes in BGP Update messages.

In one example embodiment, an NVE and/or an OVG may advertise its capability via the BGP Open message and may advertise its routes and corresponding encapsulation types via the BGP Update message. When an OVG receives route information, the OVG may not need to redistribute the route to other NVEs. However, if the OVG is an edge node (e.g. located at the edge or boundary of a network), the OVG may advertise the route information to an external domain.

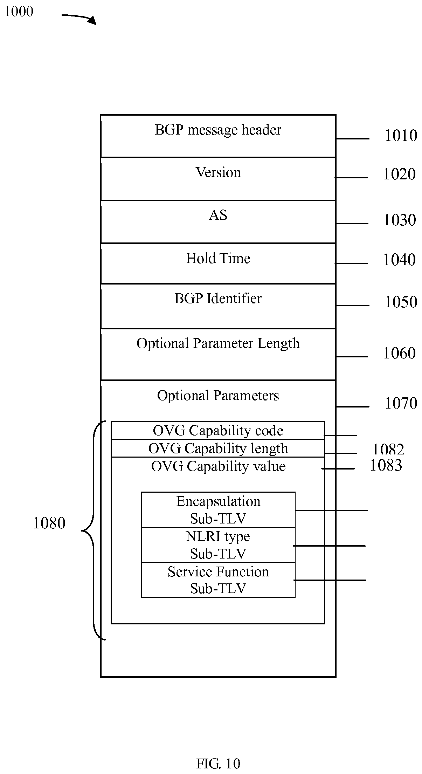

FIG. 10 illustrates an example embodiment of a BGP Open message 1000 with OVG capability. The BGP Open message 1000 is defined in RFC 4271, which is incorporated herein by reference as if reproduced in its entirety. BGP Open Message 1000 may be sent by a BGP speaker to a BGP peer after the underlying Transport Control Protocol (TCP) is established. The BGP Open message 1000 may comprise a header field 1010, a version field 1020, an Autonomous System (AS) field 1030, a hold time field 1040, a BGP identifier field 1050, an optional parameter length field 1060, and a variable-sized optional parameter 1070. The header field 1010 may comprise a header type field that may indicate the message type, a header length field that may indicate the length of the header, and a header marker field that may indicate the total length of the message. Other embodiments of BGP message types may include Open messages, Update messages, Keep Alive messages, and Notification messages. The header type field, header length field, and header marker field may be about one octet long, two octets long, and 16 octets long, respectively.

The version field 1020 may be about one octet long and may be an unsigned integer that indicates the BGP version of the message. The AS field 1030 may be about two octets long and may indicate the AS number of the sending BGP. The hold time field 1040 may be about two octets long and may be an unsigned integer that indicates the number of seconds the sending BGP proposes for the value of the hold timer for calculating the maximum duration between successive Keep Alive and/or Update messages transmission. The BGP identifier field 1050 may be about four octets long and may be used to identify the IP address assigned to the sending BGP. The optional parameter length field 1060 may be about one octet long and may be an unsigned integer that indicates the total length of the optional parameter field 1070. The optional parameter field 1070 may comprise a plurality of optional parameters and may vary in length. The optional parameter field 1070 is TLV encoded. A TLV encoded message may include a type field that may indicate the message type, followed by a length field that may indicate the size of the message value, and a variable-sized series of bytes that carry the data for the message.

In one example embodiment, an OVG capability TLV 1080 may be added to the optional parameter field 1070 in the BGP Open message 1000 to indicate the support of OVNs 230 with multiple data plane encapsulations. The OVG capability TLV 1080 may comprise a capability code 1081, a length field 1082, and an OVG capability message value 1083. The capability code 1081 may be assigned by the Internet Assigned Numbers Authority (IANA). The length field 1082 may indicate the size of the OVG capability message value 1083. The OVG capability message value 1083 may comprise a supported encapsulation sub-TLV 1091, a supported NLRI type sub-TLV 1092, and a supported service function sub-TLV 1093. Since capability announcement messages may be optional in BGP, a peer BGP may send an OPEN statement without OVG capability TLV 1080 when the BGP peer does not support OVG capability. A BGP session may only begin when BGP peers agree to the supported functions. If BGP peers support the capability but do not support the same set of mechanisms, the responding BGP may set a flag to enable the support for both BGP peers in a session. In one example embodiment, the supported mechanism in each direction may also be different.

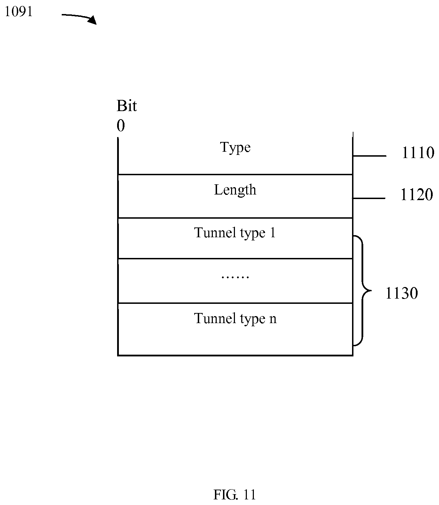

FIG. 11 illustrates an example embodiment of a more detailed view of the supported encapsulation sub-TLV 1091 of FIG. 10. Supported encapsulation sub-TLV 1091 may comprise a type field 1110, a length field 1120, and a supported encapsulation message value 1130. The type field 1110 may indicate the message is a supported encapsulation message. The length field 1120 may indicate the size of the supported encapsulation message value 1130. The supported encapsulation message value 1130 may comprise a plurality of tunnel types that the BGP speaker may support. Each of the tunnel types may be about 2 octets long. The tunnel types are values defined in BGP tunnel encapsulation attribute types in RFC 5512. In order to support the example embodiments described in the present disclosure, three additional tunnel encapsulation attribute types VXLAN, NVGRE, and MPLS may also be assigned values.

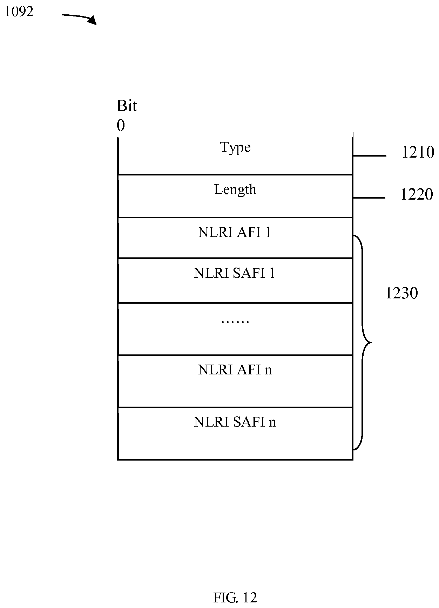

FIG. 12 illustrates an example embodiment of a more detailed view of the supported NLRI type sub-TLV 1092 of FIG. 10. Supported NLRI type sub-TLV 1092 may comprise a type field 1210, a length field 1220, and a supported NLRI type message value 1230. The type field 1210 may indicate the message is a supported NLRI type message. The length field 1220 may indicate the size of the supported NLRI type message value 1230. The supported NLRI type message value 1230 may include a plurality of address family identifiers (AFIs) and subsequent address family identifiers (SAFIs), which may indicate the route types. Each AFI or SAFI may be about 2 octets long. Currently, AFI may be Internet Protocol Version 4 (IPv4), Internet Protocol Version 6 (IPv6), or Layer 2 Virtual Private Network (L2VPN), and SFI may be IPv4, IPv6, or Ethernet Virtual Private Network (EVPN), as defined in RFC 5512.

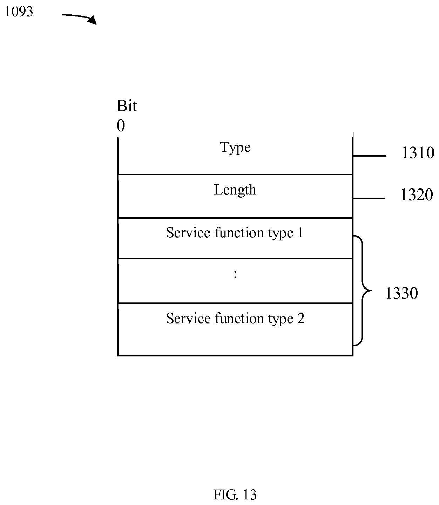

FIG. 13 illustrates an example embodiment of a more detailed view of the supported service function sub-TLV 1093 of FIG. 10. Supported service function sub-TLV 1093 may comprise a type field 1310, a length field 1320, and a supported service function value 1330. The type field 1310 may indicate the message is a supported service function message. The length field 1320 may indicate the size of the supported service function message value 1330. The supported service function message value 1330 may include a plurality of supported service function types. Each supported service function type may be about 2 octets long. The supported service function message value 1330 may include service function types, such as firewall, intrusive protection service, intrusive detection service, load balancing, network address translation (NAT), and other service function types.

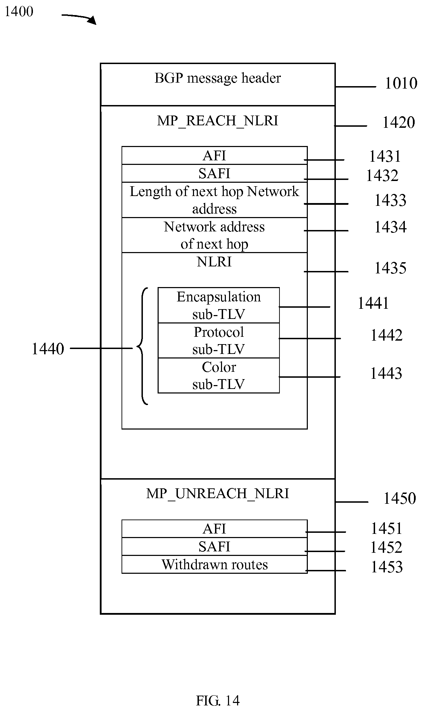

FIG. 14 illustrates an example embodiment of a BGP Update message 1400 with tunnel encapsulation attributes. The BGP Update message 1400 is defined in RFC 4271 and extended in RFC 4760, which is incorporated herein by reference as if reproduced in its entirety. BGP Update message 1400 may be used to send routing updates to BGP peers advertising feasible routes and withdrawn routes. The BGP Update message 1400 may comprise a header field 1010, a variable-sized Multiprotocol Reachable Network Layer Reachable Information (MP_REACH_NLRI) field 1420, and a variable-sized Multiprotocol Unreachable Network Layer Reachable Information (MP_UNREACH_NLRI) field 1450. The header field 1010 may indicate a BGP Update message type in the header type field 1010. The MP_REACH_NLRI field 1420 may advertise the feasible routes and may comprise an AFI field 1431, a SAFI field 1432, a length of next hop network address field 1433, a network address of next hop field 1434, and a NLRI field 1435. The NLRI field 1435 may comprise an optional transitive tunnel encapsulation attribute TLV 1440 as defined in RFC 5512. The MP_UNREACH_NLRI field 1450 may advertise the withdrawn routes and may comprise an AFI field 1451, a SAFI field 1452, and a withdrawn routes field 1453.

When an NVE or an OVG advertises its routes, the supported encapsulation type or types may also be advertised via the tunnel encapsulation attribute TLV 1440. The tunnel encapsulation attribute TLV 1440 may comprise an encapsulation sub-TLV 1441, a protocol type sub-TLV 1442, and a color sub-TLV 1443. Currently, the encapsulation types defined in the encapsulation sub-TLV 1441 may only include Layer Two Tunneling Protocol Version 3 (L2TPv3), GRE, and Internet Protocol in Internet Protocol (IP in IP). In order to support the encapsulation types described herein, three encapsulation sub-TLVs for VXLAN, NVGRE, and MPLS may be added. The protocol type sub-TLV 1442 may be encoded to indicate the type of the payload packets that will be encapsulated. When the encapsulation type is VXLAN, NVGRE or MPLS, the payload may carry an Ethernet frame, an IP packet, or others. The color sub-TLV 1443 may be encoded as a way to color the corresponding tunnel TLV.

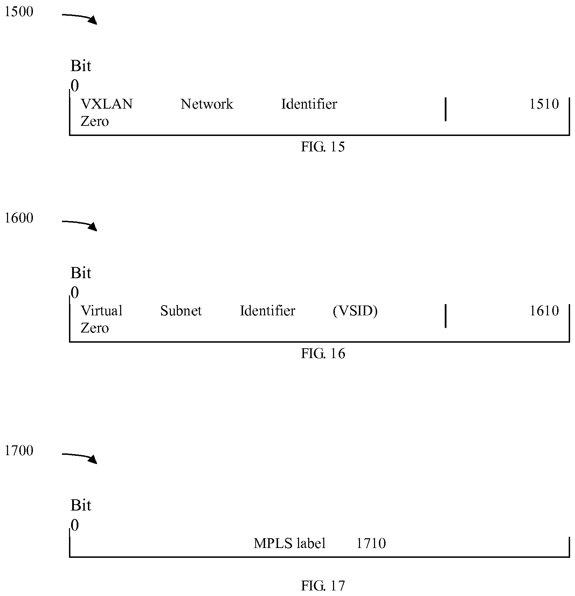

FIG. 15 is a schematic diagram of an example embodiment of a VXLAN encapsulation sub-TLV value 1500 comprising a VXLAN network identifier 1510 that is about 3 octets long. FIG. 16 is a schematic diagram of an example embodiment of an NVGRE encapsulation sub-TLV value 1600 comprising a Virtual Subnet identifier (VSID) 1610 that is about 3 octets long. FIG. 17 is a schematic diagram of an example embodiment of a MPLS over IP encapsulation sub-TLV value 1700 comprising a MPLS label 1710 that is about 4 octets long.

The BGP extensions may facilitate the control plane functions in an OVN with multiple data plane encapsulations described in the present disclosure. The tunnel initiation/termination, tunnel selections, data plane encapsulations/decapsulations, and encapsulation translations may be independent from the control plane protocol employed. The control plane protocol may simply provide automatic signaling mechanisms for peers (e.g. NVEs 120, OVGs 220 from FIG. 2) in an OVN to discover routes and encapsulation types.

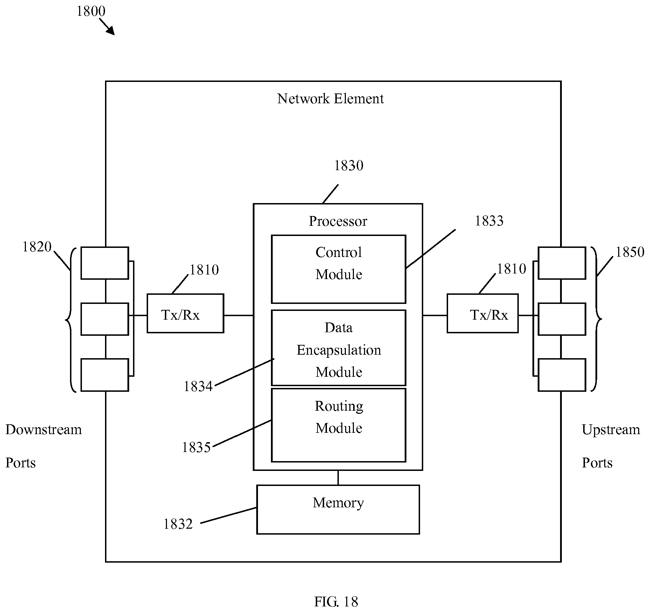

FIG. 18 is a schematic diagram of an embodiment of a Network Element (NE) 1800, such as an NVE 120 of FIG. 1 that may connect TSs 110 to an OVN 230, an NVE 120 of FIG. 2 that may select overlay tunnel automatically, or an OVG 220 of FIG. 2 that may provide encapsulation translation in an OVN 230 with multiple data plane encapsulations. In some embodiments, NE 1800 may also act as other node(s) in the network. One skilled in the art will recognize that the term NE encompasses a broad range of devices of which NE 1800 is merely an example. NE 1800 is included for purposes of clarity of discussion, but is in no way meant to limit the application of the present disclosure to a particular NE embodiment or class of NE embodiments. At least some of the features/methods described in the disclosure may be implemented in a network apparatus or component such as an NE 1800. For instance, the features/methods in the disclosure may be implemented using hardware, firmware, and/or software installed to run on hardware. The NE 1800 may be any device that transports frames through a network, e.g., a switch, router, bridge, server, a client, etc. As shown in FIG. 18, the NE 1800 may comprise transceivers (Tx/Rx) 1810, which may be transmitters, receivers, or combinations thereof. A Tx/Rx 1810 may be coupled to plurality of downstream ports 1820 for transmitting and/or receiving frames from other nodes and a Tx/Rx 1810 coupled to plurality of upstream ports 1850 for transmitting and/or receiving frames from other nodes, respectively. A processor 1830 may be coupled to the Tx/Rx 1810 to process the frames and/or determine which nodes to send the frames. The processor 1830 may comprise one or more multi-core processors and/or memory devices 1832, which may function as data stores, buffers, etc. Processor 1830 may be implemented as a general processor or may be part of one or more application specific integrated circuits (ASICs) and/or digital signal processors (DSPs). Processor 1830 may comprise a control module 1833, which may implement the control plane functions described in method 700. Processor 1830 may further comprise a data plane encapsulation module 1834, which may implement the data plane functions described in method 800 or the data plane encapsulation translation described in method 900. Processor 1830 may further comprise a routing module 1835, which may implement the update and maintenance of forwarding table to obtain TS address to NVE address mapping or NVE encapsulation type, route selections, and tunnel selections. In an alternative embodiment, the control module 1833, and/or data encapsulation module 1834, and/or the routing module 1835 may be implemented as instructions stored in memory 1832, which may be executed by processor 1830. The memory module 1832 may comprise a cache for temporarily storing content, e.g., a Random Access Memory (RAM). Additionally, the memory module 1832 may comprise a long-term storage for storing content relatively longer, e.g., a Read Only Memory (ROM). For instance, the cache and the long-term storage may include dynamic random-access memories (DRAMs), solid-state drives (SSDs), hard disks, or combinations thereof.

It is understood that by programming and/or loading executable instructions onto the NE 1800, at least one of the processor 1830, the cache, and the long-term storage are changed, transforming the NE 1800 in part into a particular machine or apparatus, e.g., a multi-core forwarding architecture, having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be implemented in software, because re-spinning a hardware implementation is more expensive than re-spinning a software design. Generally, a design that is stable that will be produced in large volume may be implemented in hardware, for example in an ASIC, because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, R₁, and an upper limit, Rᵤ, is disclosed, any number falling within the range is specifically disclosed. In particular, the following numbers within the range are specifically disclosed: R = R₁ + k * (Rᵤ - R₁), wherein k is a variable ranging from 1 percent to 100 percent with a 1 percent increment, i.e., k is 1 percent, 2 percent, 3 percent, 4 percent, 5 percent, ... 50 percent, 51 percent, 52 percent, ..., 95 percent, 96 percent, 97 percent, 98 percent, 99 percent, or 100 percent. Moreover, any numerical range defined by two R numbers as defined in the above is also specifically disclosed. The use of the term "about" means ±10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of.

## Claims

1. A method (900) for providing communication over an overlay virtual network, OVN, with multiple data plane encapsulations at a tunnel endpoint comprising:
receiving (910) a data packet via a first overlay tunnel, wherein the data packet comprises an encapsulation header of a first encapsulation type and an inner destination address;
determining (930, 940) an egress tunnel endpoint and a second encapsulation type supported by the egress tunnel end point based on the inner destination address;
performing (950) encapsulation translation on the data packet by replacing the encapsulation header of the first encapsulation type with an encapsulation header of the second encapsulation type to form a translated packet; and
forwarding (970) the translated packet toward the egress tunnel endpoint via a second overlay tunnel,
wherein the first encapsulation type and the second encapsulation type are different encapsulation types, and
wherein the data packet is destined to the egress tunnel endpoint.

2. The method of claim 1, further comprising:
obtaining corresponding encapsulation types from a plurality of peers; and
maintaining a forwarding table with the peers' corresponding encapsulation types, wherein the peers are members of the OVN.

3. The method of claim 1, wherein determining the egress tunnel endpoint and the second encapsulation type supported by the egress tunnel endpoint comprises:
retrieving (930) the inner destination address from the data packet; and
obtaining (930, 940) a mapping between the inner destination address and an address of the egress tunnel endpoint and the second encapsulation type from a forwarding table.

4. The method of claim 1, wherein the received data packet comprises a tunnel header comprising a source Internet Protocol, IP, address and a destination IP address, and wherein the method further comprises setting (960) the destination IP address in the tunnel header to an IP address of the egress tunnel endpoint.

5. The method of claim 4, further comprising setting (960) the source IP address in the tunnel header to an IP address of the tunnel endpoint.

6. The method of claim 1, further comprising:
advertising (710) one or more supported encapsulation types; and
establishing (770) overlay tunnels to peers with an encapsulation type that is one of the supported encapsulation types, wherein the first overlay tunnel and the second overlay tunnel are one of the established overlay tunnels.

7. The method of claim 1, further comprising
receiving a common data packet that is destined to more than one receiving tunnel endpoints via the first overlay tunnel;
determining the receiving tunnel end points;
retrieving encapsulation types that are supported by the receiving tunnel end points;
re-encapsulating the common data packet with each of the encapsulation types supported by the receiving tunnel end points; and
forwarding the common data packet toward the receiving tunnel endpoints, wherein each of the receiving tunnel end points support a same or a different encapsulation type.

8. The method of claim 1, further comprising advertising (710) one or more supported encapsulation types, wherein advertising the supported encapsulation types comprises sending a Border Gateway Protocol, BGP, Open message comprising the supported encapsulation types and sending a BGP Update message comprising the supported encapsulation types and corresponding encapsulation attributes, and wherein the first encapsulation type and the second encapsulation type are a virtual extensible Local Area Network, VXLAN, encapsulation type, a Network Virtualization over Generic Routing Encapsulation, NVGRE, encapsulation type, or a Multiprotocol Label Switching, MPLS, encapsulation type.

9. A Network Element (1800), NE, in a overlay virtual network, OVN, the NE comprising transceivers (1810), Tx/Rx, which may be transmitters, receivers, or combinations thereof, a plurality of downstream ports (1820) and upstream ports (1850) each for transmitting and/or receiving frames from other nodes and coupled to the Tx/Rx (1810), and a processor (1830) coupled to the Tx/Rx (1810) to process the frames and/or determine which nodes to send the frames, wherein the processor (1830) comprises a data plane encapsulation module (1834), which is configured to:
receive a data packet via a first overlay tunnel, wherein the data packet comprises an encapsulation header of a first encapsulation type and an inner destination address;
determine an egress tunnel endpoint and a second encapsulation type supported by the egress tunnel end point based on the inner destination address;
perform encapsulation translation on the data packet by replacing the encapsulation header of the first encapsulation type with an encapsulation header of the second encapsulation type to form a translated packet; and
forward the translated packet toward the egress tunnel endpoint via a second overlay tunnel,
wherein the first encapsulation type and the second encapsulation type are different encapsulation types, and
wherein the data packet is destined to the egress tunnel endpoint.

10. The NE of claim 9, wherein the NE (1800) is an Overlay Virtual Gateway, OVG, and supports one or more Overlay Virtual Networks, OVNs, and wherein the NE (1800) is configured to check for an identifier that identifies a corresponding OVN when a data packet is received from an overlay tunnel.

11. The NE of claim 9, wherein the NE (1800) is configured to advertise the supported encapsulation types, and wherein advertising the supported encapsulation types comprises sending a Border Gateway Protocol, BGP, Open message comprising the supported encapsulation type and sending a BGP Update message comprising the supported encapsulation type and corresponding encapsulation attributes.

## Patentansprüche

1. Verfahren (900) zum Bereitstellen von Kommunikation über ein virtuelles Overlay-Netz, OVN, mit mehreren Datenebeneneinkapselungen an einem Tunnelendpunkt, das Folgendes umfasst:
Empfangen (910) eines Datenpakets über einen ersten Overlay-Tunnel, wobei das Datenpaket einen Einkapselungskopf eines ersten Einkapselungstyps und eine interne Zieladresse umfasst;
Bestimmen (930, 940) eines Ausgangstunnelendpunkts und eines zweiten Einkapselungstyps, der durch den Ausgangstunnelendpunkt unterstützt wird basierend auf der inneren Zieladresse;
Ausführen (950) von Einkapselungsumsetzung auf dem Datenpaket durch Ersetzen des Einkapselungskopfs des ersten Einkapselungstyps durch einen Einkapselungskopf des zweiten Einkapselungstyps, um ein umgesetztes Paket zu bilden; und
Weiterleiten (970) des umgesetzten Pakets zu dem Ausgangstunnelendpunkt über einen zweiten Overlay-Tunnel,
wobei der erste Einkapselungstyp und der zweite Einkapselungstyp unterschiedliche Einkapselungstypen sind, und
wobei das Datenpaket für den Ausgangstunnelendpunkt bestimmt ist.

2. Verfahren nach Anspruch 1, das ferner Folgendes umfasst:
Erhalten entsprechender Einkapselungstypen von mehreren Peers; und
Halten einer Weiterleitungstabelle mit den Peers entsprechenden Einkapselungstypen, wobei die Peers Mitglieder des OVN sind.

3. Verfahren nach Anspruch 1, wobei das Bestimmen des Ausgangstunnelendpunkts und des zweiten Einkapselungstyps, der durch den Ausgangstunnelendpunkt unterstützt wird, Folgendes umfasst:
Abrufen (930) der inneren Zieladresse aus dem Datenpaket; und
Erhalten (930, 940) einer Abbildung zwischen der inneren Zieladresse und einer Adresse des Ausgangstunnelendpunkts und dem zweiten Einkapselungstyp aus einer Weiterleitungstabelle.

4. Verfahren nach Anspruch 1, wobei das empfangene Datenpaket einen Tunnelkopf umfasst, der eine Ursprungs-Internetprotokoll-Adresse, Ursprungs-IP-Adresse, und eine Ziel-IP-Adresse umfasst, und wobei das Verfahren ferner Einstellen (960) der Ziel-IP-Adresse in dem Tunnelkopf auf eine IP-Adresse des Ausgangstunnelendpunkts umfasst.

5. Verfahren nach Anspruch 4, das ferner Einstellen (960) der Ursprungs-IP-Adresse in dem Tunnelkopf auf eine IP-Adresse des Tunnelendpunkts umfasst.

6. Verfahren nach Anspruch 1, das ferner Folgendes umfasst:
Ankündigen (710) eines oder mehrerer unterstützter Einkapselungstypen; und
Aufbauen (770) von Overlay-Tunneln zu Peers mit einem Einkapselungstyp, der einer aus den unterstützten Einkapselungstypen ist, wobei der erste Overlay-Tunnel und der zweite Overlay-Tunnel einer der aufgebauten Overlay-Tunnel sind.

7. Verfahren nach Anspruch 1, das ferner Folgendes umfasst:
Empfangen eines gemeinsamen Datenpakets, das für mehr als einen Empfangstunnelendpunkt bestimmt ist, über den ersten Overlay-Tunnel;
Bestimmen der Empfangstunnelendpunkte;
Abrufen von Einkapselungstypen, die durch die Empfangstunnelendpunkte unterstützt werden;
erneutes Einkapseln des gemeinsamen Datenpakets mit jedem der Einkapselungstypen, die durch die Empfangstunnelendpunkte unterstützt werden; und
Weiterleiten des gemeinsamen Datenpakets zu den Empfangstunnelendpunkten, wobei jeder aus den Empfangstunnelendpunkten denselben oder einen unterschiedlichen Einkapselungstyp unterstützt.

8. Verfahren nach Anspruch 1, das ferner Ankündigen (710) eines oder mehrerer unterstützter Einkapselungstypen umfasst, wobei das Ankündigen der unterstützten Einkapselungstypen Senden einer Grenz-Gateway-Protokoll-Öffnungsnachricht, BGP-Öffnungsnachricht, die die unterstützten Einkapselungstypen umfasst, und Senden einer BGP-Aktualisierungsnachricht, die die unterstützten Einkapselungstypen und entsprechenden Einkapselungsattribute umfasst, umfasst, und wobei der erste Einkapselungstyp und der zweite Einkapselungstyp ein Einkapselungstyp des virtuellen erweiterbaren lokalen Netzes, VXLAN-Einkapselungstyp, ein Einkapselungstyp für Virtualisierung über generische Lenkungs-Einkapselung, NVGRE-Einkapselungstyp, oder ein Einkapselungstyp für Mehrprotokoll-Etikettvermittlung, MPLS-Einkapselungstyp, sind.

9. Netzelement (1800), NE, in einem virtuellen Overlay-Netz, OVN, wobei das NE Sender/Empfänger (1810), Tx/Rx, die Sender, Empfänger oder Kombinationen daraus sein können, mehrere stromabwärts gelegene Anschlüsse (1820) und stromaufwärts gelegene Anschlüsse (1850), jeder zum Empfangen und/oder Senden von Rahmen anderer Knoten und mit dem Tx/Rx (1810) gekoppelt, und einen Prozessor (1830), der mit den Tx/Rx (1810) gekoppelt ist, um die Rahmen zu verarbeiten und/oder zu bestimmen, zu welchen Knoten die Rahmen gesendet werden sollen, umfasst, wobei der Prozessor (1830) ein Datenebenen-Einkapselungsmodul (1834) umfasst, das dazu konfiguriert ist:
ein Datenpaket über einen ersten Overlay-Tunnel zu empfangen, wobei das Datenpaket einen Einkapselungskopf eines ersten Einkapselungstyps und eine interne Zieladresse umfasst;
einen Ausgangstunnelendpunkt und einen zweiten Einkapselungstyp, der durch den Ausgangstunnelendpunkt unterstützt wird, basierend auf der inneren Zieladresse zu bestimmen;
Einkapselungsumsetzung auf dem Datenpaket durch Ersetzen des Einkapselungskopfs des ersten Einkapselungstyps durch einen Einkapselungskopf des zweiten Einkapselungstyps auszuführen, um ein umgesetztes Paket zu bilden; und
das umgesetzte Paket zu dem Ausgangstunnelendpunkt über einen zweiten Overlay-Tunnel weiterzuleiten,
wobei der erste Einkapselungstyp und der zweite Einkapselungstyp unterschiedliche Einkapselungstypen sind, und
wobei das Datenpaket für den Ausgangstunnelendpunkt bestimmt ist.

10. NE nach Anspruch 9, wobei das NE (1800) ein virtuelles Overlay-Gateway, OVG, ist und ein oder mehrere virtuelle Overlay-Netze, OVNs unterstützt, und wobei das NE (1800) konfiguriert ist, auf eine Kennung zu prüfen, die ein entsprechendes OVN identifiziert, wenn ein Datenpaket aus einem Overlay-Tunnel empfangen wird.

11. NE nach Anspruch 9, wobei das NE (1800) konfiguriert ist, die unterstützten Einkapselungstypen anzukündigen, und wobei Ankündigen der unterstützten Einkapselungstypen Senden einer Grenz-Gateway-Protokoll-Öffnungsnachricht, BGP-Öffnungsnachricht, die die unterstützten Einkapselungstypen umfasst, und Senden einer BGP-Aktualisierungsnachricht, die die unterstützten Einkapselungstypen und entsprechende Einkapselungsattribute umfasst, umfasst.

## Revendications

1. Procédé (900) pour assurer une communication via un réseau virtuel superposé, OVN, doté d'encapsulations multiples du plan de données à un point d'extrémité de tunnel, comportant les étapes consistant à :
recevoir (910) un paquet de données via un premier tunnel de superposition, le paquet de données comportant un en-tête d'encapsulation d'un premier type d'encapsulation et une adresse de destination intérieure ;
déterminer (930, 940) un point d'extrémité de tunnel de sortie et un deuxième type d'encapsulation pris en charge par le point d'extrémité de tunnel de sortie d'après l'adresse de destination intérieure ;
effectuer (950) une traduction d'encapsulation sur le paquet de données en remplaçant l'en-tête d'encapsulation du premier type d'encapsulation par un en-tête d'encapsulation du deuxième type d'encapsulation pour former un paquet traduit ; et
transmettre (970) le paquet traduit vers le point d'extrémité de tunnel de sortie via un deuxième tunnel de superposition,
le premier type d'encapsulation et le deuxième type d'encapsulation étant des types d'encapsulation différents, et
le paquet de données étant destiné au point d'extrémité de tunnel de sortie.

2. Procédé selon la revendication 1, comportant en outre les étapes consistant à :
obtenir des types d'encapsulation correspondants provenant d'une pluralité de pairs ; et
entretenir une table de transmission avec des types d'encapsulation correspondants des pairs, les pairs étant membres de l'OVN.

3. Procédé selon la revendication 1, la détermination du point d'extrémité de tunnel de sortie et du deuxième type d'encapsulation pris en charge par le point d'extrémité de tunnel de sortie comportant les étapes consistant à :
extraire (930) l'adresse de destination intérieure du paquet de données ; et
obtenir (930, 940) un mappage entre l'adresse de destination intérieure et une adresse du point d'extrémité de tunnel de sortie et le deuxième type d'encapsulation à partir d'une table de transmission.

4. Procédé selon la revendication 1, le paquet de données reçu comportant un en-tête de tunnel comportant une adresse de protocole Internet, IP, d'origine et une adresse IP de destination, et le procédé comportant en outre l'étape consistant à spécifier (960) comme adresse IP de destination, dans l'en-tête de tunnel, une adresse IP du point d'extrémité de tunnel de sortie.

5. Procédé selon la revendication 4, comportant en outre l'étape consistant à spécifier (960) comme adresse IP d'origine, dans l'en-tête de tunnel, une adresse IP du point d'extrémité de tunnel.

6. Procédé selon la revendication 1, comportant en outre les étapes consistant à :
annoncer (710) un ou plusieurs types d'encapsulation pris en charge ; et
établir (770) des tunnels de superposition vers des pairs présentant un type d'encapsulation qui est l'un des types d'encapsulation pris en charge, le premier tunnel de superposition et le deuxième tunnel de superposition faisant partie des tunnels de superposition établis.

7. Procédé selon la revendication 1, comportant en outre les étapes consistant à :
recevoir un paquet de données commun qui est destiné à plus d'un point d'extrémité de tunnel de réception via le premier tunnel de superposition ;
déterminer les points d'extrémité de tunnel de réception ;
récupérer des types d'encapsulation qui sont pris en charge par les points d'extrémité de tunnel de réception ;
renouveler l'encapsulation du paquet de données commun avec chacun des types d'encapsulation pris en charge par les points d'extrémité de tunnel de réception ; et transmettre le paquet de données commun vers les points d'extrémité de tunnel de réception, chacun des points d'extrémité de tunnel de réception prenant en charge un même type ou un type différent d'encapsulation.

8. Procédé selon la revendication 1, comportant en outre l'étape consistant à annoncer (710) un ou plusieurs types d'encapsulation pris en charge, l'annonce des types d'encapsulation pris en charge comportant l'envoi d'un message d'ouverture sous protocole de passerelle frontière, BGP, comportant les types d'encapsulation pris en charge et l'envoi d'un message d'actualisation BGP comportant les types d'encapsulation pris en charge et des attributs d'encapsulation correspondants, et le premier type d'encapsulation et le deuxième type d'encapsulation étant un type d'encapsulation pour réseau local extensible virtuel, VXLAN, un type d'encapsulation pour encapsulation de virtualisation de réseau par routage générique, NVGRE, ou un type d'encapsulation pour commutation multiprotocole avec étiquette, MPLS.

9. Élément de réseau (1800), NE, dans un réseau virtuel superposé, OVN, le NE comportant des émetteurs-récepteurs (1810), Tx/Rx, qui peuvent être des émetteurs, des récepteurs ou des combinaisons de ceux-ci, une pluralité de ports aval (1820) et de ports amont (1850) servant chacun à émettre et/ou à recevoir des trames en provenance d'autres noeuds et couplés aux Tx/Rx (1810), et un processeur (1830) couplé aux Tx/Rx (1810) pour traiter les trames et/ou déterminer à quels noeuds envoyer les trames, le processeur (1830) comportant un module (1834) d'encapsulation dans le plan de données, qui est configuré pour :
recevoir un paquet de données via un premier tunnel de superposition, le paquet de données comportant un en-tête d'encapsulation d'un premier type d'encapsulation et une adresse de destination intérieure ;
déterminer un point d'extrémité de tunnel de sortie et un deuxième type d'encapsulation pris en charge par le point d'extrémité de tunnel de sortie d'après l'adresse de destination intérieure ;
effectuer une traduction d'encapsulation sur le paquet de données en remplaçant l'en-tête d'encapsulation du premier type d'encapsulation par un en-tête d'encapsulation du deuxième type d'encapsulation pour former un paquet traduit ; et
transmettre le paquet traduit vers le point d'extrémité de tunnel de sortie via un deuxième tunnel de superposition,
le premier type d'encapsulation et le deuxième type d'encapsulation étant des types d'encapsulation différents, et
le paquet de données étant destiné au point d'extrémité de tunnel de sortie.

10. NE selon la revendication 9, le NE (1800) étant une passerelle virtuelle de superposition, OVG, et prenant en charge un ou plusieurs réseaux virtuels superposés, OVN, et le NE (1800) étant configuré pour vérifier la présence d'un identifiant qui identifie un OVN correspondant lorsqu'un paquet de données est reçu en provenance d'un tunnel de superposition.

11. NE selon la revendication 9, le NE (1800) étant configuré pour annoncer les types d'encapsulation pris en charge, et l'annonce des types d'encapsulation pris en charge comportant l'envoi d'un message d'ouverture sous protocole de passerelle frontière, BGP, comportant le type d'encapsulation pris en charge et l'envoi d'un message d'actualisation BGP comportant le type d'encapsulation pris en charge et des attributs d'encapsulation correspondants.
